# EUROPÄISCHE PATENTSCHRIFT

(11) **EP 0 450 275 B1**
(45) Veröffentlichungstag und Bekanntmachung des Hinweises auf die Patenterteilung: **23.03.1994**
(21) Anmeldenummer: 91101441.3
(22) Anmeldetag: 04.02.1991
(51) Int. Cl.: B23Q 1/02, B23Q 3/10

(54) **Befestigungsplatte**
Mounting plate
Plaque de fixation

(30) Priorität: 04.04.1990 DE 4010840
(43) Veröffentlichungstag der Anmeldung: 09.10.1991
(73) Patentinhaber: Festo KG, D-73734 Esslingen (DE)
(72) Erfinder: Stoll, Kurt, Dipl.-Ing., W-7300 Esslingen (DE)
(74) Vertreter: Magenbauer, Rudolf, Dipl.-Ing.

(56) Entgegenhaltungen:
- DE-A- 2 149 060
- DE-A- 3 827 749
- GB-A- 1 605 143
- Katalog "item Der Gesamtkatalog MB System", Ausgabe 1989, S. 22-24, 32-34, 40, 41, 43-47, 66, 69-74.

## Beschreibung

Die Erfindung betrifft eine Befestigungsplatte für Bauelemente wie Ventile oder sonstige Gegenstände und Einrichtungen, mit in der einen Plattenoberfläche ausgebildeten, in einer Reihe parallel und im Abstand nebeneinanderliegend angeordneten nutartigen Befestigungsvertiefungen, und mit mehreren im Platteninnern parallel zu den Befestigungsvertiefungen verlaufenden Versorgungskanälen für ein Medium wie Fluid oder Energie, wobei die Befestigungsvertiefungen und die Versorgungskanäle in Reihenrichtung der Befestigungsvertiefungen alternierend aufeinanderfolgend angeordnet sind.

Eine derartige Befestigungsplatte geht aus der DE 38 27 749 Al hervor. Sie erlaubt das Aufspannen oder Befestigen von Bauelementen wie Ventilen oder sonstigen Gegenständen und Einrichtungen wie Arbeitszylinder oder dergleichen unter Vermittlung der Befestigungsvertiefungen. In letzteren lassen sich beispielsweise Verankerungsteile wie Spannvorrichtungen oder dergleichen festlegen. Durch die Versorgungskanäle ist ein beliebiges Medium transportierbar, z.B. ein Fluid wie Druckluft oder Energie in anderer Form. Befestigte Bauelemente, Gegenstände oder Einrichtungen können durch bei Bedarf erfolgendes Anzapfen der Versorgungkanäle mit dem beispielsweise für ihren Betrieb erforderlichen Medium versorgt werden.

Trotz aller Vorteile ist die bekannte Befestigungsplatte wegen des relativ hohen Gewichts noch relativ unhandlich. Außerdem ist bei einigen Anwendungsfällen der zum Anbringen von Bauelementen oder dergleichen zur Verfügung stehende Platz etwas knapp bemessen. Lediglich eine der beiden größeren Plattenoberflächen steht zum Befestigen von Bauelementen oder zur Verbindung mit einer Tragstruktur zur Verfügung.

Es ist daher die Aufgabe der Erfindung, die eingangs genannte Befestigungsplatte so zu verbessern, daß sie bei vereinfachter Handhabung und kompakten Abmessungen noch universeller einsetzbar ist.

Zur Lösung dieser Aufgabe ist vorgesehen, daß in der der einen ersten Plattenoberfläche entgegengesetzten zweiten Plattenoberfläche weitere Befestigungsvertiefungen ausgebildet sind, die ebenfalls parallel und im Abstand nebeneinanderliegend in einer Reihe mit gleicher Reihenrichtung wie die parallel dazu verlaufenden Befestigungsvertiefungen der ersten Plattenoberfläche angeordnet sind,und. denen ebenfalls Versorgungskanäle in einer Weise zugeordnet sind, daß sich in Reihenrichtung eine alternierend aufeinanderfolgende Anordnung von Befestigungsvertiefungen und Versorgungskanälen ergibt, daß ein jeweiliger zwischen einander benachbarten Befestigungsvertiefungen einer jeweiligen Reihe angeordneter Befestigungskanal einer Befestigungsvertiefung der anderen Reihe quer zur Reihenrichtung gegenüberliegt, so daß in Reihenrichtung mehrere aufeinanderfolgend angeordnete Paare bestehend aus jeweils zwei in Höhenrichtung über einander liegenden Versorgungskanälen und Befestigungsvertiefungen vorhanden sind, wobei die Versorgungskanäle und Befestigungsvertiefungen jeweils unmittelbar aufeinanderfolgender Paare entgegengesetzten Plattenoberflächen zugeordnet sind, und daß im Bereich zwischen den Versorgungskanälen und Befestigungsvertiefungen jeweils aufeinanderfolgender Kanal- und Vertiefungspaare ein kanalförmiger Hohlraum vorgesehen ist, dessen Wandkontur in den einem Versorgungskanal und einer Befestigungsvertiefung benachbarten Bereichen unter Bildung stegförmiger Wandabschnitte im wesentlichen entsprechend der Kontur des zugeordneten Kanalwand- bzw. Vertiefungswandbereiches gestaltet ist.

Auf diese Weise liegt eine Befestigungsplatte vor, die es erlaubt, wahlweise an einer der beiden Plattenoberflächen oder gleichzeitig an beiden Plattenoberflächen Bauelemente, Gegenstände, Einrichtungen oder dergleichen anzubringen. Der zur Verfügung stehende Montageplatz ist demzufolge praktisch verdoppelt worden. Außerdem besteht die Möglichkeit, die Befestigungsplatte mit einfachen Mitteln über die Befestigungsnuten ihrer einen Plattenoberfläche an einer Unterlage festzulegen. Durch die kanalförmigen Hohlräume zwischen benachbarten Kanal- und Vertiefungspaaren stellt sich zudem eine beträchtliche Gewichtseinsparung der Befestigungsplatte ohne nennenswerte Beeinträchtigung der Gesamtstabilität ein. Infolge der an die Konturierung der benachbarten Vertiefungen und Kanäle angepaßten Formgebung dieser Hohlräume ergibt sich eine Vielzahl stegförmiger Wandabschnitte mit im wesentlichen konstanter Wanddicke, so daß bei einer Querbelastung der Befestigungsplatte eine optimale Versteifung ohne kritische Bereiche stattfindet. Die erzielte hohe Steifigkeit ist auch vor allem deshalb von Vorteil, weil die Befestigungsplatte trotz der umfangreichen Anbaumöglichkeiten äußerst schmal bauen kann. Indem ferner jeder Befestigungsnut im Bereich des Nutgrundes ein Versorgungskanal zugeordnet ist, läßt sich bei Bedarf eine unabhängige Versorgung mit Medium gewährleisten.

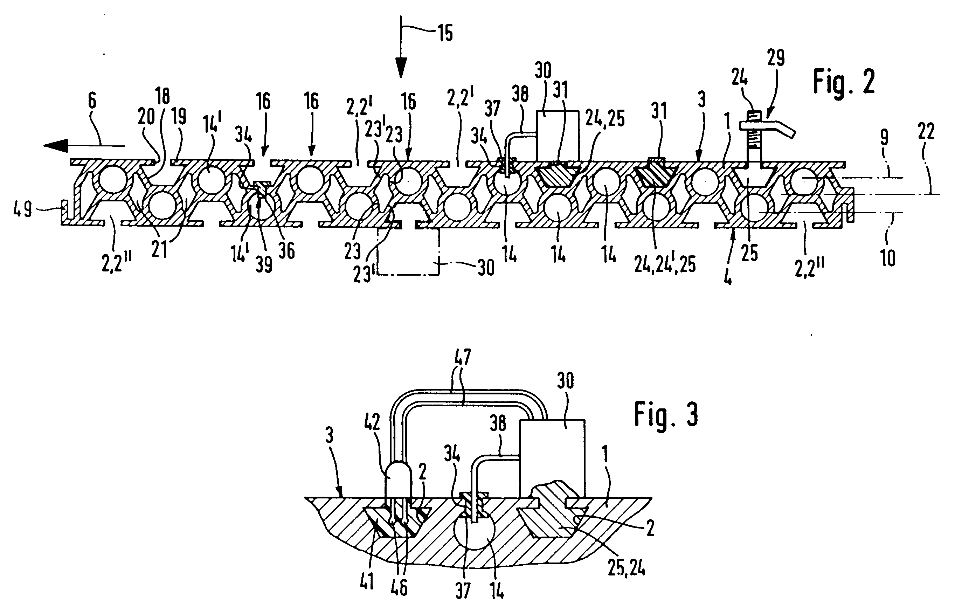

Aus dem Prospekt der Firma Item GmbH, Solingen, "Der Gesamtkatalog MB System", Ausgabe 1989, geht ein Profilsystem für den Aufbau unterschiedlicher Tragkonstruktionen hervor. Ein auf der Seite 23, Ziffer 7 und auf Seite 32, links unten, gezeigtes Profilteil verfügt dabei über zwei Plattenoberflächen, in denen jeweils parallel und im Abstand nebeneinanderliegend eine Reihe von Befestigungsvertiefungen angeordnet ist, denen jeweils kanalartige Bohrungen zugeordnet sind, so daß sich insgesamt mehrere aufeinanderfolgend angeordnete Paare bestehend aus jeweils zwei in Höhenrichtung übereinander liegenden Bohrungen und Befestigungsvertiefungen ergeben. Während allerdings andere in dem Prospekt gezeigte Profilteile nach Art pneumatischer Leitungen verwendbar sind, indem sie entsprechende Versorgungskanäle enthalten, ist das genannte Profilteil gerade nicht zur Führung eines Mediums vorgesehen. Ein Vergleich mit anderen, einen Versorgungskanal aufweisenden Profilteilen - z.B. das Profilteil gemäß Ziffer 5 und Abbildung 3 auf Seite 69 - macht deutlich, daß die kanalartigen Bohrungen zur Aufnahme von Verbindungselementen vorgesehen sind, um eine stirnseitige Befestigung weiterer Bauelemente zu ermöglichen. Abgesehen von den nicht vorhandenen Versorgungskanälen unterscheidet sich das betreffende Profilteil des Prospektes auch noch dadurch von der erfindungsgemäßen Ausgestaltung, daß keine zusätzlichen kanalförmigen Hohlräume zwischen den benachbarten Bohrungs- und Vertiefungspaaren vorgesehen sind, die bei reduziertem Gewicht eine hohe Stabilität der Befestigungsplatte gewährleisten.

Vorteilhafte Weiterbildungen der Erfindung sind in den Unteransprüchen aufgeführt.

Bei bevorzugten Ausgestaltungen ist vorgesehen, daß mindestens einer der Versorgungskanäle mit mindestens einer in die Befestigungplatte eingebrachten oder einzubringenden, zweckmäßigerweise in Richtung der Plattenhöhe verlaufenden und vorzugsweise lösbar verschließbaren Medium-Anschlußöffnung kommuniziert oder kommunizieren kann, die vorzugsweise an der dem Versorgungskanal am nächsten liegenden Plattenoberfläche im Bereich zwischen zwei Befestigungsvertiefungen ausmündet. Hier kann auch vorgesehen sein, daß die Medium-Anschlußöffnung in die unmittelbar benachbarte, der anderen Plattenoberfläche zugeordnete Befestigungsvertiefung ausmündet. Die Anschlußöffnungen ermöglichen ein Anzapfen der Versorgungskanäle, um darin geführtes Medium an der gewünschten Stelle der Plattenoberfläche verfügbar zu machen, beispielsweise um eine dort festgelegte Einrichtung, z.B. einen Arbeitszylinder, zu betreiben.

Von Vorteil ist ferner, wenn in mindestens eine der vorhandenen Befestigungsvertiefungen mindestens ein Verankerungsteil lösbar einsetzbar ist, das die feste Verbindung zwischen der Befestigungsplatte und dem anzubringenden Bauelement oder dergleichen herstellt. Es kann im eingesetzten Zustand zum Beispiel im wesentlichen eben mit der zugeordneten Plattenoberfläche abschließen und kann im Bereich der Abschlußfläche Befestigungsmittel wie Magneteinrichtungen, Klettenverschlußeinrichtungen, Klebeverbindungseinrichtungen oder dergleichen aufweisen.

Nachfolgend wird die Erfindung anhand der in der Zeichnung abgebildeten Ausführungsbeispiele näher erläutert.

Es zeigen im einzelnen:
- Figur 1: eine erste Bauform der erfindungsgemäßen Befestigungsplatte in perspektivischer, unter Weglassung der kanalförmigen Hohlräume vereinfachter Darstellung,
- Figur 2: die Befestigungsplatte aus Figur 1 im Detail und im Querschnitt entsprechend der in Figur 1 angedeuteten Schnittlinie II-II und
- Fig. 3: einen vergrößerten Ausschnitt der Befestigungsplatte aus Figur 1 im Querschnitt zur Verdeutlichung der Befestigung eines Bauelements und seiner beispielhaften Versorgung mit zum Betrieb erforderlichen Mitteln.

Die in den Figuren abgebildeten Befestigungsplatten 1 haben im Querschnitt gesehen eine etwa rechteckige Außenkontur, unterbrochen nur von einer Mehrzahl von Befestigungsvertiefungen 2. Solche Befestigungsvertiefungen 2 sind in beiden großflächigen Plattenoberflächen 3, 4 ausgebildet, welche Plattenoberflächen ansonsten zweckmäßigerweise im wesentlichen eben sind. Die durch die beiden Plattenoberflächen 3, 4 gelegten Ebenen verlaufen parallel zueinander.

Die in die eine erste Plattenoberfläche 3 eingelassenen Befestigungsvertiefungen 2, 2' haben allesamt lineare Erstreckung und sind in einer Reihe quer zur Plattenlängsrichtung 5 mit Abstand nebeneinanderliegend angeordnet. Die Reihenrichtung 6 verläuft demnach in Breitenrichtung der Befestigungsplatte.

Die Befestigungsvertiefungen 2, 2'' in der entgegengesetzten zweiten, in der dargestellten Gebrauchsstellung nach unten weisenden Plattenoberfläche 4 sind in entsprechender Weise ebenfalls parallel und im Abstand nebeneinanderliegend in einer Reihe angeordnet, wobei die Reihenrichtung 6 mit derjenigen der erstgenannten Vertiefungsreihe zusammenfällt. Auf diese Weise verlaufen auch die Befestigungsvertiefungen 2 der beiderseitigen Plattenoberflächen 3, 4 untereinander parallel.

Die Befestigungsvertiefungen 2 sind nutartig ausgebildet und durchziehen die Befestigungsplatte 1 in Längsrichtung 5 jeweils zweckmäßigerweise vollständig, so daß sie an den beiden einander entgegengesetzten Plattenstirnseiten 7, 7' ausmünden. Außerdem ist zweckmäßigerweise vorgesehen, daß alle vorhandenen Befestigungsvertiefungen 2 im Querschnitt gesehen untereinander die gleiche Form und Kontur aufweisen.

Die Plattenhöhe der Befestigungsplatte 1 ist definiert vom Abstand zwischen den beiden Plattenoberflächen 3, 4. Vorzugsweise ist die in Richtung der Plattenhöhe gemäß Doppelpfeil 8 gemessene Tiefe der einzelnen Befestigungsvertiefungen in Bezug zur jeweils zugeordneten Plattenoberfläche 3, 4, zu der hin sie offen sind, ebenfalls identisch. Dadurch ergibt sich eine insbesondere durch Figur 2 verdeutlichte Anordnung, wonach die Befestigungsvertiefungen 2 der jeweiligen Vertiefungsreihe in einer gemeinsamen Ebene 9, 10 verlaufen, welche beiden Vertiefungsebenen 9, 10 einander gegenüber in Höhenrichtung 8 beabstandet sind.

Zusätzlich zu den Befestigungsvertiefungen 2 enthält die Befestigungsplatte 1 im Innern eine Mehrzahl von Versorgungskanälen 14. Sie sind nicht wie die Befestigungsvertiefungen zu einer der Plattenoberflächen hin offen sondern ringsum geschlossen. Allerdings münden sie zweckmäßigerweise wie die Befestigungsvertiefungen 2 an den beiden Plattenstirnseiten 7, 7' aus und verlaufen parallel zu den Befestigungsvertiefungen. Die Querschnittskontur der Versorgungskanäle 14 ist untereinander vorzugsweise gleich, bevorzugt ist sie gerundet. Bei den Ausführungsbeispielen verfügen die Versorgungskanäle 14 über einen einheitlichen kreisförmigen Querschnitt.

Da sowohl die Kanäle als auch die Vertiefungen durchgehend sind, kann die Befestigungsplatte unter Verwendung eines entsprechend konturierten Werkzeuges einfach im Rahmen eines Strangpressvorganges hergestellt werden.

Die Versorgungskanäle 14 sind zur wie auch immmer gearteten Führung eines Mediums geeignet, das an praktisch beliebiger Stelle der beiden Plattenoberflächen 3, 4 benötigt wird.

Bei dem Medium kann es sich beispielsweise um ein Fluid wie Druckluft oder ein hydraulisches Medium wie Öl handeln. Auch Vakuum kann durch die Versorgungskanäle 14 gefördert werden. Daneben ist es möglich, Energie hindurchzuführen, beispielsweise elektrische oder optische Energie, insbesondere über entsprechend angepaßte Energieleiter wie Kabel, Glasfasern oder dergleichen, die in den Versorgungskanälen 14 verlegt werden können.

Zugunsten eines kompakten und leichtgewichtigen Plattenaufbaus ist vorgesehen, daß in Blickrichtung gemäß Pfeil 15 auf eine der beiden Plattenoberflächen 3, 4 gesehen jeweils eine Befestigungsvertiefung der der einen Plattenoberfläche zugeordneten Reihe im Bereich zwischen zwei benachbarten Befestigungsvertiefungen der anderen entgegengesetzten Reihe angeordnet ist. Die Befestigungsvertiefungen beider Plattenoberflächen 3, 4 sind mithin einander gegenüber auf Lücke gesetzt, wobei eine lückenmittige Anordnung bevorzugt ist. Die Versorgungskanäle 14 sind so im Platteninnern angeordnet, daß zwischen zwei einander unmittelbar benachbarten Befestigungsvertiefungen einer jeweiligen Plattenoberfläche 3, 4 ein Versorgungskanal 14 zu liegen kommt. Ein jeweiliger zwischen zwei Befestigungsvertiefungen der einen Vertiefungsreihe angeordneter Versorgungskanal 14 liegt dabei auch immer zusätzlich einer Befestigungsvertiefung 2 der anderen Vertiefungsreihe in Höhenrichtung gemäß Doppelpfeil 8 gegenüber.

Es ergibt sich dadurch ein Aufbau, der vor allem aus der Figur 2 deutlich wird. In mit der Reihenrichtung gemäß Pfeil 6 zusammenfallender Breitenrichtung der Befestigungsplatte 1 ist eine Mehrzahl von Paaren 16 bestehend aus jeweils zwei in Höhenrichtung 8 übereinanderliegenden Versorgungskanälen 14 und Befestigungsvertiefungen 2 aufeinanderfolgend angeordnet, wobei die Kanäle 14 und Vertiefungen 2 jeweils unmittelbar aufeinanderfolgender Kanal- und Vertiefungspaare 16 entgegengesetzten Plattenoberflächen 3, 4 oder Vertiefungsreihen zugeordnet sind.

Bei den Ausführungsbeispielen verlaufen die einer jeweiligen Vertiefungsreihe zugeordneten Versorgungskanäle 14 im wesentlichen in der gleichen Ebene 9, 10 wie die Befestigungsvertiefungen 2 der entsprechenden Reihe, so daß in einer jeden Ebene 9, 10 in Breitenrichtung der Befestigungsplatte Versorgungskanäle 14 und Befestigungsvertiefungen 2 alternierend aufeinanderfolgend angeordnet sind.

Bei den vorhandenen Befestigungsvertiefungen kann es sich um T-förmige oder schwalbenschwanzförmige Vertiefungen oder dergleichen handelt. Jedenfalls verfügen sie über einen ausgehend von der zugehörigen Plattenoberfläche 3, 4, zu der hin sie längsseitig offen sind, tiefer im Platteninnern liegenden Haltebereich 18, an den sich über einen Absatz 19 in Richtung zur zugehörigen Plattenoberfläche ein Vertiefungshals 20 mit geringerer Vertiefungsbreite anschließt. Handelt es sich um T-förmige Befestigungsvertiefungen, dann hat der Haltebereich 18 im Querschnitt gesehen eine rechteckige Kontur. Bei der abgebildeten bevorzugten Ausführungsform sind die Befestigungsvertiefungen 2 in ihrem Haltebereich 18 trapezförmig konturiert, wobei die parallelen Grundlinien des Trapezes parallel zu den Plattenoberflächen 3, 4 verlaufen und der die Verbindung zur Plattenoberfläche herstellende schmälere Vertiefungshals an der Seite der größeren der beiden Trapezgrundseiten ansetzt.

Insbesondere zu Zwecken der Material - und Gewichtseinsparung ist vorgesehen, daß in dem jeweiligen Bereich zwischen zwei in Breitenrichtung 6 aufeinanderfolgenden Versorgungskanälen 14, 14', die verschiedenen Vertiefungsebenen zugeordnet sind, ein kanalförmiger Hohlraum 21 angeordnet ist. Dies ist in Figur 2 abgebildet. Auch die Hohlräume durchziehen die Befestigungsplatte 1 vollständig in Längsrichtung, haben also ebenfalls linearen Verlauf. Alle kanalförmigen Hohlräume 21 sind beim Ausführungsbeispiel gemäß Figur 2 in einer Mittelebene 22 verlaufend angeordnet, die zwischen den beiden Vertiefungsebenen 9, 10 parallel zu diesen verläuft.

Die Wandkontur der Hohlräume 21 in den einem Versorgungskanal 14 und einer Befestigungsvertiefung 2 benachbarten Bereichen ist im wesentlichen entsprechend der Kontur des benachbarten Kanalwand- bzw. Vertiefungswandbereiches gestaltet. Auf diese Weise ergibt sich in den den Versorgungskanälen 14 zugeordneten Hohlraum-Wandbereichen 23 eine gekrümmte Kontur mit Wölbung ins Hohlrauminnere, wobei die Krümmungsmittelpunkte mit dem Zentrum des jeweils zugeordneten Versorgungskanals 14 zusammenfallen. Die beiden dazwischen liegenden Hohlraum-Wandbereiche 23', die jeweils einer Befestigungsvertiefung 2 zugewandt sind, sind indes im wesentlichen eben in Anpassung an die Schrägseite der trapezförmigen Befestigungsvertiefungen. Insgesamt ergibt sich mithin eine Art Rautenkontur des Hohlraumquerschnittes, wobei zwei einander gegenüberliegende Rautenseiten nach innen gewölbt sind.

Auf diese Weise erzielt man eine Querschnittskontur der Befestigungsplatte 1, die aus einer Vielzahl von geraden und/oder gekrümmten stegförmigen zusammenhängenden Wandabschnitten besteht, so daß bei geringem Materialbedarf eine hohe Festigkeit erzielt wird.

In den Befestigungsvertiefungen 2 können Verankerungsteile 24 mit einer Haltepartie 25 insbesondere lösbar eingesetzt werden. Die Kontur der Haltepartie 25 ist zweckmäßigerweise komplementär zur Kontur der zugeordneten Befestigungsvertiefung. Über die Verankerungsteile können beliebige Bauelemente, Gegenstände und/oder Einrichtungen an der Befestigungsplatte 1 fixiert werden. Auch kann die Befestigungsplatte 1 damit gegenüber einer anderen Halterung befestigt werden.

Beispielhaft ist in Figur 2 ein Verankerungsteil 24 in Gestalt eines Spannpratzens 29 angedeutet, der mit einer sich an die Haltepartie anschließenden Gewindepartie aus der die Haltepartie 25 aufnehmenden Befestigungsvertiefung 2 heraus über die Plattenoberfläche 3 vorragt. So kann im Rahmen einer Schraubverbindung beispielsweise ein Werkstück angebracht werden. Das Verankerungsteil 24 kann aber auch beispielsweise zu einer anderen Spanneinrichtung gehören, die es erlaubt, Werkstücke oder andere Gegenstände zu spannen. Die Betätigungsweise kann maschinell erfolgen, wobei das Betriebsmedium auf noch zu erläuternde Weise über die Versorgungskanäle zuführbar ist.

Bei dem in Figur 3 abgebildeten Ausführungsbeispiel ist eine Haltepartie 25 von einem entsprechend gestalteten Fuß eines Bauelements 30 gebildet.

Insgesamt ist ersichtlich, daß Verankerungsteile mit beliebigen Befestigungsmitteln für Bauteile, Gegenstände oder Einrichtungen Verwendung finden können, wenn nur eine Haltepartie vorhanden ist, die eine Befestigung in den Befestigungsvertiefungen 2 erlaubt. Bei den Ausführungsbeispielen hintergreift die Haltepartie 25 den oben erwähnten Absatz 19 der zugeordneten Befestigungsvertiefung, so daß eine Entnahme in Höhenrichtung 8 der Befestigungsplatte 1 ausgeschlossen ist. Die Montage erfolgt daher zweckmäßigerweise durch Einschieben von einer der beiden Plattenstirnseiten 7, 7' her.

Anstelle eines in der montierten Stellung über die Plattenoberfläche vorragenden Befestigungsmittels, wie dies bei der Gewindepartie des Spannpratzens 29 der Fall ist, kann auch vorgesehen sein, daß die Befestigungsmittel im wesentlichen eben mit den neben der Befestigungsvertiefung befindlichen Bereichen der Plattenoberfläche 3, 4 abschließen. In Figur 2 sind zwei entsprechende Ausführungsbeispiele dargestellt. In beiden Fällen besteht das Verankerungsteil 24, 24' im wesentlichen nur aus der Haltepartie 25, die in etwa eben mit der Plattenoberfläche 3 abschließt und dort einen dünnen Streifen 31 als Befestigungsmittel trägt. Bei den Streifen handelt es sich beispielsweise um Magnetstreifen oder um Klettenverschlußstreifen als Teil einer Klettenverschlußeinrichtung. Bei dem in Figur 2 links abgebildeten Beispiel ist ein Klebestreifen 31 vorgesehen, auf dem ein Bauelement 30 lösbar haftet.

Die Streifen 31 erstrecken sich zweckmäßigerweise in Längsrichtung der zugeordneten Vertiefung, wobei pro Verankerungsteil 24 durchaus mehrerer Streifenabschnitte mit Abstand aufeinanderfolgend angeordnet sein können.

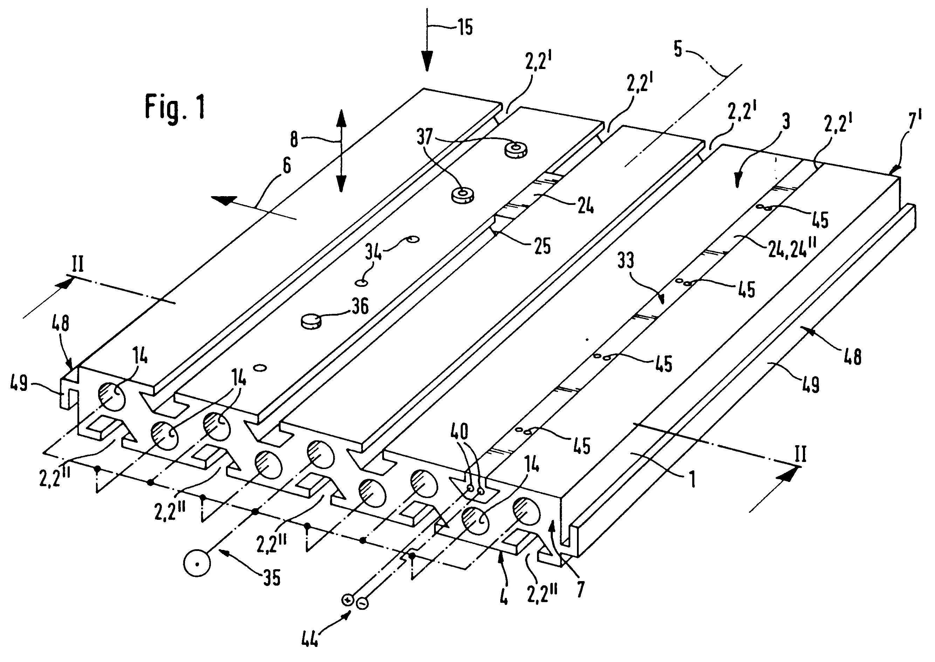

Je nach Bedarf können ein jeweiliges Verankerungsteil 24 und/oder seine Haltepartie 25 in etwa der Länge einer vorhandenen Befestigungsvertiefung 2 entsprechen oder kürzer sein. Beide Möglichkeiten sind in Figur 1 dargestellt. Da die Verankerungsteile vorzugsweise verschiebbar mit ihren Haltepartien in den Befestigungsvertiefungen fixiert sind, ergibt sich vor allem bei der kürzeren Version der Vorteil einer Positionierung an der Stelle des Bedarfs. Es versteht sich, daß zusätzlich in der Zeichnung nicht näher dargestellte Mittel zum Festlegen der Verankerungsteile an der gewünschten Stelle vorhanden sein können.

Es ist auch möglich, ein Verankerungsteil 24, 24'' lediglich als Füllteil zu verwenden, wie dies die längere Verankerungsteilversion in Figur 1 vermittelt. In diesem Falle ist lediglich eine insbesondere geschlossene Überbrückung des von der zugeordneten Befestigungsvertiefung in der Plattenoberfläche 3 verursachten Schlitzes beabsichtigt und die mit der Plattenoberfläche 3 bündige Abschlußfläche 33 des Verankerungsteils 24 stellt praktisch einen Teil der zur Auflage zur Verfügung stehenden Plattenoberfläche dar.

Um an beliebiger Stelle einer der beiden Plattenoberflächen festgelegte Bauelemente oder dergleichen mit einem zum Beispiel zu ihrem Betrieb erforderlichen Medium wie Druckluft oder elektrische Energie zu versorgen, verfügt die Befestigungsplatte 1 zweckmäßigerweise über mindestens eine und zweckmäßigerweise mehrere Anschlußöffnungen 34, über die mindestens ein Versorgungskanal 14 anzapfbar ist. Es ist grundsätzlich vorgesehen, die Versorgungskanäle 14 über eine strichpunktiert angedeutete Versorgungseinrichtung 35 mit entsprechendem Medium zu beschicken, das insbesondere über die Kanalmündungen an einer der Stirnseiten 7, 7' zu- oder abgeführt wird. Sofern es sich bei dem Medium um ein Fluid handelt, bilden die Versorgungskanäle praktisch Strömungskanäle. Allerdings können in den Versorgungskanälen auch elektrische oder optische Kabel bzw. Leitungen verlegt sein. Vorteilhaft ist bei alledem, daß die einzelnen Versorgungskanäle 14 bei Bedarf unabhängig voneinander eingesetzt werden können. So ist es bespielsweise möglich, in einer einzigen Befestigungsplatte in unterschiedlichen Versorgungskanälen gleichzeitig Druckluft, Vakuum oder elektrische Energie zu transportieren. Über die Medium-Anschlußöffnungen 34 kann das jeweilige Medium sodann beispielsweise durch den Anschluß einer Druckmittelleitung oder dergleichen oder durch das Herausführen von Kabeln oder dergleichen an die gewünschte Stelle der Plattenoberfläche gebracht werden.

Pro Versorgungskanal 14 kann mindestens eine Anschlußöffnung vorgesehen sein. Auch ist es möglich, einem oder mehreren der Versorgungskanäle 14 eine aus mehreren in Kanallängsrichtung beabstandeten Anschlußöffnungen bestehende Reihe von Anschlußöffnungen zuzuordnen, wie dies in Figur 1 gezeigt ist. Die Anschlußöffnungen 34 können je nach Art des zuführenden Mediums dauernd offen oder zum Beispiel mittels Stopfen 36 oder Ventilen 37 öffenbar verschlossen sein. Letzteres ermöglicht insbesondere bei einem fluidischen Medium den Anschluß eines Druckmittelschlauches oder einer Druckmittelleitung 38, die andererseits zu einem Bauelement 30 geführt ist. Auch können übliche Anschlußverbindungsstücke verwendet werden, wobei ergänzend zweckmäßigerweise Rückschlagventile vorgesehen sind.

Bei den Anschlußöffnungen 34 kann es sich um vorgefertigte Öffnungen handeln oder aber um vom Anwender bedarfsgerecht nachträglich zum Beispiel durch Einstechen einbringbare Öffnungen.

Eine einem Versorgungskanal 14 zugeordnete Anschlußöffnung 34 mündet einerseits in diesen Versorgungskanal 14 um andererseits an der dem Versorgungskanal 14 nächstliegenden Plattenoberfläche im Bereich zwischen zwei benachbarten Befestigungsvertiefungen 2 auszumünden. Dies verdeutlichen die Figuren 1 und 3. Andererseits ist es aber auch möglich, die in einen Versorgungskanal 14 mündenden Anschlußöffnungen derart zu führen, daß sie andererseits in einer Befestigungsvertiefung 2 ausmünden. Letzteres ist in Figur 2 bei 39 beispielhaft angedeutet. Dabei ist es zweckmäßig, wenn über die Anschlußöffnung ein jeweiliger Versorgungskanal 14 mit der ihm zur Bildung eines Kanal- und Vertiefungspaares 16 zugeordneten Befestigungsvertiefung kommuniziert. Diese Lösung hat den Vorteil, daß jeder Befestigungsvertiefung ein eigener unabhängiger Versorgungskanal zur Mediumzufuhr bzw. -abfuhr zur Verfügung steht.

Vorzugsweise ist auch in mindestens einer Befestigungsvertiefung 2 insbesondere unter Vermittlung eines Verankerungsteils 24 oder Füllteils 24'' Energie insbesondere in Gestalt elektrischer oder optischer Signale transportierbar. Das Füllteil 24'' in Figur 1 ist zur Erläuterung entsprechend angepaßt. Es besteht aus isolierendem Material wie Kunststoff und enthält im Innern mindestens einen und vorzugsweise zwei in Längsrichtung verlaufende Stromleiter 40. Sie führen an der einen Stirnseite 7 aus dem Füllteil 24'' heraus und zu einer Energieversorgungseinrichtung 44. Bei Bedarf sind Steckverbindungseinrichtungen zwischenschaltbar. Im Innern des Füllteils 24'' können Verzweigungen vorgesehen sein, so daß die Leiter 40 zur Abschlußfläche 33 ausmünden. Auf diese Weise liegen Anschlußstellen 45 vor, von denen über geeignete Steckverbindungseinrichtungen die Energie abgenommen werden kann.

Anstelle elektrischer Leiter können auch vorzugsweise optische Leiter wie Glasfasereinrichtungen verwendet werden. So lassen sich vor allem Impulse problemlos übertragen.

In Figur 3 ist eine weitere Variante abgebildet, bei dem wiederum ein Energieleitungselement 41 in einer Befestigungsvertiefung 2 untergebracht ist. Es verfügt über insbesondere versenkt liegende isolierte Stromleiter 46 in Gestalt von Stromschienen, die von der Plattenoberfläche 3 her zugänglich sind. So ist es möglich, eine zum Beispiel schlittenartige Steckeinrichtung 42 anzuschließen, mit der die übermittelten Signale in beliebigen Verschiebestellungen zuverlässig abgegriffen werden können. Die Signale werden dann über Leitungen 47 zu einem auf der Befestigungsplatte 2 fixierten Bauelement 30 geleitet.

Die universellen Einsatzmöglichkeiten der erfindungsgemäßen Befestigungsplatte sind offensichtlich. Über die Befestigungsvertiefungen lassen sich beliebige Bauelemente, zum Beispiel Werkstücke, Ventilgruppen, Arbeitszylinder usw. festlegen, und über die Versorgungskanäle 14 ist es möglich, ein zum Betrieb solcher Bauelemente oder dergleichen erforderliches Medium zu- bzw. abzuführen. Ergänzend können aber auch die Befestigungsvertiefungen zur Signalleitung beitragen. In diesem Falle wird zum Beispiel ein Isolationsprofil in einer Befestigungsvertiefung verankert, das zum Beispiel aus Kupfer bestehende Leiter oder Leitungen enthält oder Lichtleiter wie Glasfaser.

Von Vorteil ist es, wenn mehrere Befestigungsplatten insbesondere mit ihren seitlich angeordneten Längsseiten 48 aneinander kuppelbar sind, um Plattenflächen beliebiger Größe zusammenzusetzen. Zu diesem Zwecke verfügen die Befestigungsplatten an der entsprechenden Längsseite zweckmäßigerweise über Kupplungseinrichtungen 49, die ein lösbares Zusammenfügen oder Zusammenstecken erlauben. Diese Längsseiten sind zweckmäßigerweise befestigungsvertiefungslos.

## Patentansprüche

1. Befestigungsplatte für Bauelemente wie Ventile oder sonstige Gegenstände und Einrichtungen, mit in der einen Plattenoberfläche (3) ausgebildeten, in einer Reihe (6) parallel und im Abstand nebeneinanderliegend angeordneten nutartigen Befestigungsvertiefungen (2, 2'), und mit mehreren im Platteninnern parallel zu den Befestigungsvertiefungen (2, 2') verlaufenden Versorgungskanälen (14) für ein Medium wie Fluid oder Energie, wobei die Befestigungsvertiefungen (2) und die Versorgungskanäle (14) in Reihenrichtung (6) der Befestigungsvertiefungen (2) alternierend aufeinanderfolgend angeordnet sind, dadurch gekennzeichnet, daß in der der einen ersten Plattenoberfläche (3) entgegengesetzten zweiten Plattenoberfläche (4) weitere Befestigungsvertiefungen (2, 2'') ausgebildet sind, die ebenfalls parallel und im Abstand nebeneinanderliegend in einer Reihe mit gleicher Reihenrichtung (6) wie die parallel dazu verlaufenden Befestigungsvertiefungen (2, 2') der ersten Plattenoberfläche (3) angeordnet sind, und denen ebenfalls Versorgungskanäle (14) in einer Weise zugeordnet sind, daß sich in Reihenrichtung (6) eine alternierend aufeinanderfolgende Anordnung von Befestigungsvertiefungen (2, 2'') und Versorgungskanälen (14) ergibt, daß ein jeweiliger zwischen einander benachbarten Befestigungsvertiefungen (2, 2') einer jeweiligen Reihe angeordneter Versorgungskanal (14) einer Befestigungsvertiefung (2, 2'') der anderen Reihe quer zur Reihenrichtung (6) gegenüberliegt, so daß in Reihenrichtung (6) mehrere aufeinanderfolgend angeordnete Paare (16) bestehend aus jeweils zwei in Höhenrichtung (8) übereinanderliegenden Versorgungskanälen (14) und Befestigungsvertiefungen (2) vorhanden sind, wobei die Versorgungskanäle (14) und Befestigungsvertiefungen (2, 2', 2'') jeweils unmittelbar aufeinanderfolgender Paare (16) entgegengesetzten Plattenoberflächen (3, 4) zugeordnet sind, und daß im Bereich zwischen den Versorgungskanälen (14) und Befestigungsvertiefungen (2, 2', 2'') jeweils aufeinanderfolgender Kanal- und Vertiefungspaare (16) ein kanalförmiger Hohlraum (21) vorgesehen ist, dessen Wandkontur in den einem Versorgungskanal (14) und einer Befestigungsvertiefung (2) benachbarten Bereichen (23, 23') unter Bildung stegförmiger Wandabschnitte im wesentlichen entsprechend der Kontur des zugeordneten Kanalwand- bzw. Vertiefungswandbereiches gestaltet ist.

2. Befestigungsplatte nach Anspruch 1, dadurch gekennzeichnet, daß die Befestigungsvertiefungen (2) der jeweiligen Plattenoberfläche (3, 4) im wesentlichen in einer Ebene (9, 10) mit den zugeordneten dazwischenliegenden Versorgungskanälen (14) verlaufen.

3. Befestigungsplatte nach Anspruch 1 oder 2, dadurch gekennzeichnet, daß die kanalförmigen Hohlräume (21) in einer Ebene (22) angeordnet sind, die zwischen den beiden die Vertiefungsreihen enthaltenden Ebenen (9, 10) parallel zu diesen verläuft.

4. Befestigungsplatte nach einem der Ansprüche 1 bis 3, dadurch gekennzeichnet, daß die Befestigungsvertiefungen (2), die Versorgungskanäle (14) und die kanalförmigen Hohlräume (21) sich linear in Plattenlängsrichtung (5) erstrecken und durchgehend sind, derart, daß sie an einander entgegengesetzten Plattenstirnseiten (7, 7') ausmünden.

5. Befestigungsplatte nach einem der Ansprüche 1 bis 7, dadurch gekennzeichnet, daß die zur jeweiligen Plattenoberfläche offenen Befestigungsvertiefungen (2) einen tiefer im Platteninnern liegenden Haltebereich (18) aufweisen, an den sich in Richtung zur zugeordneten Plattenoberfläche (3, 4) ein Vertiefungshals (20) mit geringerer Vertiefungsbreite anschließt, derart, daß ein in eine Befestigungsvertiefung (2) eingesetztes Verankerungsteil (24) aufgrund Hintergreifens des übergangsbereiches (19) zwischen Vertiefungshals und Haltebereich vor einer Entnahme in Höhenrichtung (8) der Platte gesichert ist.

6. Befestigungsplatte nach Anspruch 5, dadurch gekennzeichnet, daß der Haltebereich (18) der Befestigungsvertiefungen (2) im Querschnitt gesehen rechteckige oder insbesondere trapezförmige Gestalt hat, wobei bei trapezförmiger Gestalt der Vertiefungshals (20) an der Seite der größeren Trapezgrundseite ansetzt.

7. Befestigungsplatte nach einem der Ansprüche 1 bis 6, dadurch gekennzeichnet, daß die Versorgungskanäle (14) im Querschnitt gesehen eine gerundete Kontur haben, und insbesondere kreisförmigen Querschnitt aufweisen.

8. Befestigungsplatte nach einem der Ansprüche 1 bis 7, dadurch gekennzeichnet, daß mindestens einer der Versorgungskanäle (14) mit mindestens einer in die Befestigungsplatte (1) eingebrachten oder einzubringenden, zweckmäßigerweise in Richtung der Plattenhöhe (8) verlaufenden und vorzugsweise lösbar verschließbaren Medium-Anschlußöffnung (34) kommuniziert bzw. kommunizieren kann, die zweckmäßigerweise andererseits an der dem Versorgungskanal (14) nächstliegenden Plattenoberfläche (3, 4) im Bereich zwischen zwei benachbarten Befestigungsvertiefungen (2) und/oder an der entgegengesetzten Plattenseite in die zugeordnete Befestigungsvertiefung (2) ausmündet und über die der jeweilige Versorgungskanal (14) zur Hindurchführung von Medium anzapfbar ist, wobei mindestens einem Versorgungskanal (14) eine aus mehreren beabstandeten Anschlußöffnungen (34) bestehende, in Plattenlängsrichtung (5) verlaufende Öffnungs- bzw. Lochreihe zugeordnet sein kann.

9. Befestigungsplatte nach einem der Ansprüche 1 bis 8, dadurch gekennzeichnet, daß in mindestens eine Befestigungsvertiefung (2) ein Verankerungsteil (24) mit einer zur Kontur der Befestigungsvertiefung (2) insbesondere komplementären Haltepartie (25) lösbar einsetzbar ist.

10. Befestigungsplatte nach Anspruch 9, dadurch gekennzeichnet, daß das Verankerungsteil (24) im wesentlichen eben mit der zugeordneten Plattenoberfläche (3, 4) abschließt.

11. Befestigungsplatte nach Anspruch 9 oder 10, dadurch gekennzeichnet, daß das Verankerungsteil Befestigungsmittel (29, 31) für Bauteile, Gegenstände oder Einrichtungen (30) aufweist, die zum Beispiel als Magnetstreifen, Klettenverschlußstreifen, Klebestreifen oder Abschnitte hiervon ausgebildet sind.

12. Befestigungsplatte nach einem der Ansprüche 9 bis 11, dadurch gekennzeichnet, daß ein Verankerungsteil (24) ein Füllteil (24'') zur überbrückung des durch die zugeordnete Befestigungsvertiefung (2) erzeugten Schlitzes in der Plattenoberfläche (3, 4) bildet.

13. Befestigungsplatte nach einem der Ansprüche 1 bis 12, dadurch gekennzeichnet, daß in mindestens einer Befestigungsvertiefung (2) insbesondere unter Vermittlung eines Verankerungsteils (24) oder Füllteils (24'') Energie insbesondere in Gestalt elektrischer oder optischer Signale transportierbar ist, zum Beispiel indem an oder in einem beispielsweise aus Kunststoff bestehenden, insbesondere in Gestalt eines Verankerungs- oder Füllteils ausgebildeten Energietransportelement mindestens ein insbesondere als Glasfaser ausgebildeter Lichtleiter und/oder mindestens ein zum Beispiel in Gestalt einer Stromschiene ausgebildeter Stromleiter (40) angeordnet ist, und wobei Mittel (46) zum Abnehmen der Energie und zum Zuführen insbesondere zu einem auf der Befestigungsplatte festgelegten Bauelement (30) oder dergleichen vorgesehen sein können.

14. Befestigungsplatte nach einem der Ansprüche 9 bis 13, dadurch gekennzeichnet, daß ein Verankerungsteil (24) in Längsrichtung der Befestigungsvertiefungen (2) verschiebbar und insbesondere auch lösbar festlegbar ist.

## Claims

1. Fastening plate for components such as valves or other objects and devices, with slotted fastening recesses (2, 2') formed in one plate surface (3), arranged in a parallel row (6) and adjacent to one another, spaced apart, and with several supply conduits (14) for a medium such as fluid or power, running inside the plate parallel to the fastening recesses (2, 2'), wherein the fastening recesses (2, 2') and supply conduits (14) are arranged so as to alternate successively in the direction of the row (6) of fastening recesses, characterized in that, formed in the second plate surface (4) opposite the first plate surface (3) are further fastening recesses (2, 2''), likewise arranged parallel and adjacent to one another, spaced apart, in a row running in the same direction (6) as the parallel fastening recesses (2, 2') of the first plate surface (3), and which also have supply conduits (14) assigned in such a way as to produce a successively alternating arrangement of fastening recesses (2, 2'') and supply conduits (14) in the row direction (6), that each supply conduit (14) located between adjacent fastening recesses (2, 2') of a respective row lies opposite a fastening recess (2, 2'') of the other row at right-angles to the row direction (6), so that in the row direction (6) there are several successive pairs (16) each comprised of two vertically (8) superimposed supply conduits (14) and fastening recesses (2), wherein the supply conduits (14) and fastening recesses (2, 2', 2'') are each assigned to directly consecutive pairs (16) of opposite plate surfaces (3, 4) and that in the area between the supply conduits (14) and fastening recesses (2, 2', 2'') of each consecutive pair of conduits and recesses (16) is provided a conduit-shaped hollow space (21), the wall contour of which is shaped in the areas (23, 23') adjacent to a supply conduit (14) and a fastening recess (2) to form web-shaped wall sections essentially corresponding to the contour of the associated conduit wall and recess wall area.

2. Fastening plate according to claim 1, characterized in that the fastening recesses (2) of the respective plate surface (3, 4) run essentially in one plane (9, 10) with the assigned supply conduits (14) lying between them.

3. Fastening plate according to claim 1 or 2, characterized in that the conduit-shaped hollow spaces (21) are arranged in a plane (22) running between and parallel to the two planes (9, 10) containing the rows of recesses.

4. Fastening plate according to any of claims 1 to 3, characterized in that the fastening recesses (2), the supply conduits (14) and the conduit-shaped hollow spaces (21) extend linearly in the plate longitudinal direction (5) and are continuous, such that they emerge at opposite ends of the plate (7, 7').

5. Fastening plate according to any of claims 1 to 7, characterized in that the fastening recesses (2) open to the respective plate surface have a retaining area (18) lying lower in the plate interior, to which is connected in the direction of the associated plate surface (3, 4) a recess neck (20) of lesser recess width, such that an anchoring element (24) inserted in a fastening recess (2) is secured against withdrawal in the vertical direction (8) of the plate by rear-engagement of the transition zone (19) between recess neck and retaining area.

6. Fastening plate according to claim 5, characterized in that the retaining area (18) of the fastening recesses (2), viewed in cross-section, has a rectangular or in particular trapezoidal shape, with the recess neck (20) attaching to the side of the larger trapezoid base side, when the shape is trapezoidal.

7. Fastening plate according to any of claims 1 to 6, characterized in that the supply conduits (14), viewed in cross-section, have a rounded contour and in particular have a circular cross-section.

8. Fastening plate according to any of claims 1 to 7, characterized in that one or more of the supply conduits (14) communicates or can communicate with one or more medium-connection ports (34) inserted or to be inserted in the fastening plate (1), expediently running in the plate vertical direction (8) and preferably releasably closable, with the said medium-connection ports emerging at the other end at the next plate surface (3, 4) to the supply conduit (14) in the area between two adjacent fastening recesses (2) and/or at the opposite plate side in the associated fastening recess (2), and through which the respective supply conduit (14) for passage of the medium can be tapped, wherein one or more supply conduits (14) can be assigned a series of ports or apertures comprised of several spaced connection ports (34) running in the longitudinal direction (5) of the plate.

9. Fastening plate according to any of claims 1 to 8, characterized in that in one or more fastening recesses (2) an anchoring element (24) with a retaining section (25), in particular fitting the contour of the fastening recess (2) is releasably insertable.

10. Fastening plate according to claim 9, characterized in that the anchoring element (24) essentially finishes flush with the associated plate surface (3, 4).

11. Fastening plate according to claim 9 or 10, characterized in that the anchoring element has means of fastening (29, 31) for components, objects or devices (30), which may be in the form of, for example, magnetic strips, velcro strips, adhesive strips or sections thereof.

12. Fastening plate according to any of claims 9 to 11, characterized in that an anchoring element (24) forms a filling element (24'') to bridge the slot in the plate surface (3, 4) formed by the associated fastening recess (2).

13. Fastening plate according to any of claims 1 to 12, characterized in that in one or more fastening recesses (2), in particular through the agency of an anchoring element (24) or filling element (24''), energy in particular in the form of electrical or optical signals can be transmitted, for example by locating on or in an energy transmission element made of plastic, in particular in the form of an anchoring or fitting element, one or more optical fibres in particular in the form of a glass fibre and/or one or more current conductors (40) for example in the form of a busbar, and wherein means (46) to take the energy and feed it in particular to a component (30) or the like secured to the fastening plate may be provided.

14. Fastening plate according to any of claims 9 to 13, characterized in that an anchoring element (24) may also be slidably and in particular releasably attached in the longitudinal direction of the fastening recesses (2).

## Revendications

1. Plaque de fixation pour composants tels que vannes ou autres objets et dispositifs, avec des creux de fixation (2, 2') en forme de rainures, formés dans une surface (3) de la plaque, juxtaposés espacés, parallèlement, en une rangée (6), et avec plusieurs canaux d'alimentation (14) s'étendant à l'intérieur de la plaque, parallèlement aux creux de fixation (2, 2') , pour un fluide ou de l'énergie, les creux de fixation (2) et les canaux d'alimentation (14) étant disposés en succession alternée dans la direction de la rangée (6) des creux de fixation (2), caractérisée en ce que dans la seconde surface (4) de la plaque, opposée à la première surface (3) de la plaque, sont formés d'autres creux de fixation (2, 2''), qui sont également juxtaposés, espacés et disposés parallèlement, en une rangée, avec la même direction de rangée (6) que les creux de fixation (2, 2'), parallèles à ceux-ci, de la première surface (3) de la plaque, et auxquels sont également associés des canaux d'alimentation (14) de telle sorte qu'il en résulte dans la direction de la rangée (6) une succession alternée de creux de fixation (2, 2'') et de canaux d'alimentation (14), en ce qu'un canal d'alimentation (14) placé entre des creux de fixation (2, 2') voisins d'une rangée, se trouve face à un creux de fixation (2, 2'') de l'autre rangée, transversalement à la direction de la rangée (6), de manière que dans la direction de la rangée (6) on ait plusieurs paires (16) successives constituées de deux canaux d'alimentation (14) et creux de fixation (2) superposés dans la direction de la hauteur (8), les canaux d'alimentation (14) et les creux de fixation (2, 2', 2'') étant associés directement à des paires (16) successives de surfaces de plaque (3, 4) opposées, et en ce que dans la zone comprise entre les canaux d'alimentation (14) et les creux de fixation (2, 2', 2'') de paires de canaux et de creux (16) successives, est prévue une cavité (21) en forme de canal, dont le contour de la paroi dans les zones (23, 23') voisines d'un canal d'alimentation (14) et d'un creux de fixation (2), forme des parties de paroi en forme de cloisons et suit sensiblement le contour de la zone correspondante de la paroi de canal ou de la paroi de creux.

2. Plaque de fixation selon la revendication 1, caractérisée en ce que les creux de fixation (2) de la surface (3, 4) respective plate s'étendent essentiellement dans un plan (9, 10) avec les canaux d'alimentation (14) correspondants situés entre les creux.

3. Plaque de fixation selon les revendications 1 ou 2, caractérisée en ce que les cavités (21) en forme de canaux sont disposées dans un plan (22) qui s'étend entre les deux plans (9, 10) contenant les rangées de creux, parallèlement à ceux-ci.

4. Plaque de fixation selon l'une des revendications 1 à 3, caractérisée en ce que les creux de fixation (2), des canaux d'alimentation (14) et les cavités (21) en forme de canaux s'étendent linéairement dans la direction longitudinale (5) de la plaque et sont continus de manière à déboucher sur des côtés frontaux (7, 7') opposés l'un à l'autre de la plaque.

5. Plaque de fixation selon l'une des revendications 1 à 7, caractérisée en ce que les creux de fixation (2) ouverts vers la surface respective de la plaque présentent une zone de maintien (18), située plus profondément à l'intérieur de la plaque, à laquelle fait suite, dans la direction de la surface (3, 4) correspondante de la plaque, un col de creux (20) présentant une largeur réduite, de telle sorte qu'une pièce d'ancrage (24), insérée dans un creux de fixation (2) est bloquée contre une extraction dans la direction de la hauteur (8) de la plaque, du fait que la zone de transition (19) passe par derrière, entre le col du creux et la zone de maintien.

6. Plaque de fixation selon la revendication 5, caractérisée en ce que la zone de maintien (18) des creux de fixation (2), vue en coupe transversale, a une forme rectangulaire ou en particulier trapézoïdale, dans le cas d'une forme trapézoïdale, le col (20) du creux commençant sur le côté de la plus grande base du trapèze.

7. Plaque de fixation selon l'une des revendications 1 à 6, caractérisée en ce que les canaux d'alimentation (14), vus en coupe transversale, ont un contour arrondi, et en particulier présentent une section transversale circulaire.

8. Plaque de fixation selon l'une des revendications 1 à 7, caractérisée en ce que l'un au moins des canaux d'alimentation (14) communique ou peut communiquer avec au moins une ouverture de raccordement de fluide (34), introduite ou à introduire dans la plaque de fixation (1), s'étendant avantageusement dans la direction de la hauteur (8) de la plaque et pouvant être fermée de préférence de manière amovible, laquelle ouverture de raccordement de fluide débouche par ailleurs avantageusement à la surface (3, 4) de la plaque la plus proche du canal d'alimentation (14), dans la zone comprise entre deux creux de fixation (2) voisins et/ou sur le côté opposé de la plaque dans le creux de fixation (2) correspondant, et par l'intermédiaire de laquelle le canal d'alimentation (14) respectif peut être raccordé pour le passage du fluide, une rangée d'ouvertures ou de trous s'étendant dans la direction longitudinale (5) de la plaque, constituée de plusieurs ouvertures de raccordement (34) espacées,pouvant être associée à un canal d'alimentation (14) au moins.

9. Plaque de fixation selon l'une des revendications 1 à 8, caractérisée en ce qu'une pièce d'ancrage (24) avec une partie de maintien (25) en particulier complémentaire du contour du creux de fixation (2), peut être insérée de manière amovible dans au moins un creux de fixation (2).

10. Plaque de fixation selon la revendication 9, caractérisée en ce que la pièce d'ancrage (24) se trouve sensiblement dans le même plan que la surface (3, 4) correspondante de la plaque.

11. Plaque de fixation selon les revendications 9 ou 10, caractérisée en ce que la pièce d'ancrage comporte des moyens de fixation (29, 31) pour des composants, des objets ou des dispositifs (30), qui se présentent par exemple sous la forme de bandes magnétiques, de bandes à accrochage, de bandes adhésives ou de parties de celles-ci.

12. Plaque de fixation selon l'une des revendications 9 à 11, caractérisée en ce qu'une pièce d'ancrage (24) forme une pièce de remplissage (24') destinée à combler la fente produite dans la surface (3, 4) de la plaque, par le creux de fixation (2) correspondant.

13. Plaque de fixation selon l'une des revendications 1 à 12, caractérisée en ce que dans au moins un creux de fixation (2), en particulier par l'intermédiaire d'une pièce d'ancrage (24) ou d'une pièce de remplissage (24''), de l'énergie, en particulier sous la forme de signaux électriques ou optiques, peut être transportée, par exemple en ce qu'au moins un guide d'ondes lumineuses, en particulier en fibres de verre et/ou au moins un conducteur électrique (40), se présentant par exemple sous la forme d'un rail électrique, est monté sur ou dans un élément de transport d'énergie, par exemple en matière plastique, se présentant en particulier sous la forme d'une pièce d'ancrage ou d'une pièce de remplissage, et des moyens (46) pouvant être prévus pour prélever l'énergie et l'envoyer en particulier à un composant (30) ou similaire fixé sur la plaque de fixation.

14. Plaque de fixation selon l'une des revendications 9 à 13, caractérisée en ce qu'une pièce d'ancrage (24) peut être fixée de manière à pouvoir coulisser dans la direction longitudinale des creux de fixation (2) et en particulier aussi de manière amovible.
